# EUROPEAN PATENT SPECIFICATION

(11) **EP 3 086 926 B1**
(45) Date of publication and mention of the grant of the patent: **12.02.2020**
(21) Application number: 14821256.6
(22) Date of filing: 22.12.2014
(51) Int. Cl.: B29D 11/00

(54) **CONTACT LENS MOULD AND METHODS**
KONTAKTLINSENFORM UND VERFAHREN
MOULE DE LENTILLE DE CONTACT ET PROCÉDÉS

(30) Priority: 23.12.2013 GB 201322956
(43) Date of publication of application: 02.11.2016
(73) Proprietor: CooperVision International Holding Company, LP, St. Michael (BB)
(72) Inventor: MILLER, Gary Colin, Southampton SO17 1SS (GB); BROAD, Robert Andrew, Curdridge Hampshire SO32 2BD (GB); CLARK, David John, Romsey Hampshire SO51 7RW (GB); BLAINE, Jonathan Andrew Lindley, Hamble-le-Rice SO34 4RF (GB)
(74) Representative: Beck Greener LLP
(86) International application number: PCT/GB2014/053822
(87) International publication number: WO 2015/097465

(56) References cited:
- EP-A1- 0 545 720
- US-A- 5 611 970
- US-A1- 2005 128 432
- US-A1- 2006 017 185
- US-A1- 2007 252 989
- US-A1- 2008 067 702

## Description

The present invention relates to a mould for making contact lenses, a method of making the mould and a method of making contact lenses using the mould.

Contact lenses can be produced by a number of different methods. However, it is now common to form lenses using a cast moulding process.

A lens is formed by introducing a contact lens monomer mixture between two mould halves and closing the mould halves to form a mould cavity. The resultant enclosed monomer mixture is then treated, commonly with ultraviolet light or heat, to cure the mixture and form a moulded contact lens between the mould halves.

When the two mould halves are brought together, it is important that they are correctly aligned. If the mould halves are not aligned, the resultant contact lens will not have the correct shape. This is a problem which is known as "introducing prism". However, it is also a requirement that the seal between the mould halves is complete and even to prevent "flash", where there is run-out of the monomer mixture which polymerises and forms a rim around the produced lens. This flash needs to be removed before the lens can be used. In addition, in some cases, a rounding of the junction between the male and female mould halves occurs. This can produce a seam around the periphery of the formed lens, so that the lens does not have the intended edge shape. This affects comfort and fit of the lens on the eye.

Many different shapes of mould halves are known in order to avoid one or more of these issues. For example JP2003094458 discloses an axial edge seal which is caused by deformation of the male or female mould half.

US2007/0132124 discloses the use of a conical guidewall to improve centration. The guidewall is at an angle of 75 to 85°. The male mould half is over-sized and forms a seal by being forced into position in the female mould half.

WO01/42001 relates to the use of complex interlocking features on the periphery of the male and female lens cavities to ensure centration.

US4211384 discloses a moulding assembly for soft contact lenses. The seal between the two mould halves is formed using a narrow sealing ridge on one mould half.

EP0970801 discloses a mould assembly formed of two mould halves that meet together. The mould halves meet at a shallow angle, which will not assist alignment of the mould halves.

EP1407866 discloses a series of moulding assemblies comprising a female mould half and a male mould half. The mould halves in each case fit together by deformation due to the force of mating.

GB2329356 discloses a mould assembly comprising a female mould half and a male mould half. The mould halves fit together in an interference fit in an axial edge seal.

US2008/067702 discloses a contact lens mould assembly in which the first and second mould members are made of thermoplastic polyolefin resin and are interference fitted together.

However, the methods utilised typically only deal with one of the above issues. Where more than one of these issues is addressed, the method used is typically complex or relatively expensive to achieve.

In addition, it is advantageous that the two mould halves fit together in a locking arrangement without the requirement of an interference fit.

Accordingly, it is the aim of the present invention to provide a mould for making contact lenses which helps with centration of the two mould halves, prevents or reduces the formation of flash or edge seams and assists with locking the two mould halves together in a simple and cost effective manner.

In a first aspect of the present invention, there is provided a mould for the production of a contact lens, the mould comprising:
a first mould half shaped to provide the front surface of the contact lens; and
a second mould half shaped to provide the rear surface of the contact lens,
wherein the first and second mould halves form a mould cavity,
wherein the first mould half has a first rim and the second mould half has a second rim, and the first and second rims fit together to provide a seal for the mould cavity, characterized in that the first rim is inclined at an angle of x relative to an axis passing through the centre of the first and second mould halves,
wherein x is from 30 to 60°, and wherein the second rim is inclined at an angle of x-y relative to the axis passing through the centre of the first and second mould halves, where y is from 0 to 4°, wherein the angle of the first rim and the second rim is before the first and second mould halves are pushed together, and
wherein the first and second rims provide a guide for the mould halves, and
wherein the first and second rims provide a guide for the mould halves, and
wherein the first and second mould halves fit together without an interference fit.

In one embodiment of the present invention, x is from 40 to 50°. It is further preferred that y is from 0.25 to 3° and more preferably from 0.5 to 2.25°. In another embodiment of the present invention, it is preferred that the seal forms a sealing annulus having an annular radius of from 25 to 500 µm, more preferably from 50 to 250 µm.

In a second aspect of the present invention, there is provided a method of making contact lenses according to claim 6.

A third aspect of the invention provides a method according to claim 8.

Preferably at least one mould insert formed using the diamond lathe tool has an internal corner between two surfaces wherein the radius of the internal corner is less than or equal to 5µm, preferably less than or equal to 3µm. It is preferred that the method is used to make the mould of the first aspect or a mould for use in the method of the second aspect.

In a fourth aspect of the present invention, there is provided the use of a diamond lathe tool with a tip of radius less than 3µm to produce a moulding insert for a contact lens master mould.

A mould for forming a contact lens is formed of a female mould half and a male mould half. The female mould half is shaped to provide the front surface of a contact lens. The male mould half shaped to provide the back surface of a contact lens i.e. the surface which is placed on the eye.

The two mould halves fit together to form a mould cavity. In use, the contact lens monomer mixture is normally added into the female mould half and the male mould half is positioned on top to close the mould cavity with the monomer mixture in place. It is possible that the lens monomer mixture can be added onto the male mould half, although this is less usual.

In the present invention, the mould half to which the contact lens monomer mixture is added is defined as the first mould half, with the other mould half being defined as the second mould half. The first mould half is therefore usually the female mould half.

The mould halves fit together to form an edge seal. As discussed in the introduction, it is important that the edge seal is complete and even around the complete periphery of the mould cavity. Any gaps or uneven meeting at the edge seal can result in the production of flash.

The mould cavity adjacent the seal defines the shape of the edge of the lens to be produced. This shape is important as the lens edge may interact with the eye and eyelid, and if it is not optimal, it can cause lens discomfort.

Therefore, it is important that the seal is even such that the resultant lens has the designed edge shape around the whole of the periphery.

It is a feature of the present invention that the rims of the male and female mould halves provide both the edge seal and the means by which the mould halves are aligned. By using the rims to provide both features, a good seal and alignment can be provided cheaply and easily without need for complicated equipment to align the mould halves or mould halves which are complicated to mould or are difficult to fit together.

In order to achieve this, it is a requirement that there is a sealing rim which extends around the female mould half. The rim is positioned at the edge of the mould portion which forms part of the mould cavity. The rim has a constant angle relative to a central axis of the mould half. This rim forms the first half of the edge seal.

A second sealing rim is provided which extends around the male mould half. The rim is positioned at the edge of the male mould portion which forms part of the mould cavity. The rim has a constant angle relative to a central axis of the mould half. This rim forms the second half of the edge seal.

By central axis, it is intended to mean an axis running through the centre point of the portion of the mould which forms the mould cavity. It is appreciated that this is not necessarily the central point of the whole of the mould half, depending on different features present on the mould half. The central axis passes perpendicular to the surface of the mould half at that centre point. When both mould halves are correctly aligned, they will share a common central axis.

It is a feature of the present invention that, when the male and female mould halves are correctly aligned, the rims meet together to form the edge seal. In order to achieve an edge seal, they are either parallel to each other or differ by up to and including 4°. The difference in angle is such that the upper, second rim has a lower angle than the lower, first rim such that the rims will contact at the edge seal. The difference in angle is sufficiently low that when the two mould halves are pushed together, the two mould halves are essentially in contact along the whole rim. It is preferred that the difference in angles is less than or equal to 4°, more preferably less than or equal to 3°, even more preferably less than or equal to 2.25°, yet more preferably less than or equal to 2° and most preferably less than equal to 1°. Although the two rims can be completely parallel, it is preferred that the difference in angles is 0.25° or greater, and more preferably 0.5° or greater. The faces of the sealing rims therefore fit together to form a constant, even seal. As both rims are sealing rims, it is inherent that they meet together to form the edge seal and additionally provide the edge of the lens shape adjacent the sealing rims. The use of the edges to form the seal gives greater control to the edge of the lens shape by removing a potential point of inconsistency.

In addition, there is a requirement that the rims are inclined at an angle sufficient to act as a guide so that the male mould half correctly orients itself on the female mould half. The angle of inclination is defined as an angle relative to the central axis as defined above. The angle is that measured from the axis extending from the surface of the female mould half away from the mould half. The angle of inclination for the first rim is greater than 30°, preferably greater than 35°, more preferably greater than 40°. The angle of inclination is less than 60°, preferably less than 55° and more preferably less than 50°. The range of angles is from 30 to 60°, preferably from 40 to 50° and most preferably from 43 to 47°. The surface of the female mould half and the associated rim are therefore both generally concave, and the surface of the male mould half and associated rim are generally convex.

If the angle is greater than 60°, the two mould halves will not necessarily orient correctly as the male mould half will be able to rotate relative to the female mould half or it will be able to sit slightly off centre.

If the angle is less than 30°, a variety of different issues can occur. First, it becomes harder to insert the male mould into the female mould, as the entrance gap is relatively small. In addition, the lower the angle, the greater the ease with which the male mould can be over inserted, particularly where one of the moulds is deformable, so that either there is distortion in the mould or the mould cavity is reduced in size. The mould halves would then fit together in a locking fit by virtue of the interference between the two halves. This is not suitable for the present invention.

As there is no interference fit between the two halves, this additionally provides a number of advantages. The mould halves can readily be separated before filling. In addition, there is no reliance on the mould material deforming in a consistent fashion to form the correct edge.

In addition, an interference fit can cause a number of problems with the resultant lens. In some cases, the mould halves can jam together in an incorrect orientation on reclosing after monomer dosing or the male mould half can tip relative to the female mould half, causing lens prism and poor edge form.

Where an interference fit is used, small differences in concentricity and parallelism between the lens edge and the interference feature can cause poor edge form and flash

Where the interference feature is at the lens edge, such that the lens needs to be removed after curing through an aperture of the same diameter as the lens, edge defects can result.

Although some of the advantageous effects of the present invention might be seen over a broader range of 20 to 70°, the effects are less than for the claimed range of 30 to 60°.

The present invention provides lateral alignment of the mould halves to an accuracy of less than 10 µm, preferably less than 5 µm.

The mould halves can be produced of any suitable material. As the contact lens monomer mixture cures, it shrinks. The material shrinkage causes a vacuum in the sealed mould cavity which is accommodated by a deformation of one or both of the mould halves. Therefore, at least one of the mould halves must be flexible. Suitable materials include any injection mouldable plastics material with good optical properties, which are compatible with the lens material. Common mould materials include polypropylene. Alternative materials which can be used include thermoset polymers including two-part reactive thermoset materials such as flexible silicones. It is possible to form one of the mould halves using a non-flexible material such as quartz, so long as the other mould half is sufficiently flexible.

However, because the mould halves fit together using a face to face seal which does not require an interference fit, the material used can be relatively inflexible. Where an interference fit is used, a greater level of deformability would be required to ensure that the mould halves are tightly held together.

Additionally, because of the combination of good seal due to the face to face seal and the absence of an interference fit between the two mould halves, the male mould half can be drawn into the female mould half without impacting on the edge seal or compromising the form of the mould cavity.

The face to face seal of the rims of the male and female mould halves forms a sealing annulus. It is preferred that the annular radius of the seal i.e. the width of the rims where there is overlap, is relatively short, typically from 25 to 500µm. The annular radius is greater than 25 µm, preferably greater than 50 µm. The annular radius is less than 500 µm, preferably less than 250µm, more preferably less than 100 µm. However, in some circumstances, a longer annular radius of up to 1mm can be used.

Each rim can be defined as having its own annular radius. The annular radius is not necessarily identical for the rim on the male mould half and the rim on the female mould half. It is preferred that one rim has a short annular radius of the dimensions defined above. It is preferred that the other rim has an annular radius of at least 100 µm, preferably 250 µm, more preferably 500 µm and preferably greater. The annular radius of this rim is preferably less than 10 mm, more preferably less than 5 mm and yet more preferably less than 2.5 mm. It is preferred that the female mould half has the short annular radius.

The annular radius of the seal is sufficiently large so that the size of the seal is sufficiently large to prevent an interference fit due to too much pressure being present in the seal. However, the annular radius is sufficiently small to keep friction between the seal faces low.

By having one rim with a larger annular radius, the two rims can be guided together easily whilst benefitting from the low friction between the seal faces.

The mould is suitable for making a contact lens according to the second aspect of the present invention. A contact lens is made by introducing a measured amount of a contact lens monomer mixture into the female mould half and closing the mould with the male mould. Suitable monomer mixtures are well known in the art and include those disclosed in EP2087384 and EP2488895. Once the mould is closed with the monomer mixture in the mould cavity, the mould is preferably sealed closed using one of the various methods known to the skilled person. Suitable methods include sonic welding, thermal welding, the presence of interference features in the mould halves or by use of weights or clamps. In the alternative, the mould does not need to be sealed. Thereafter, the monomer mixture is cured, typically by using heat, UV light, microwave radiation, radiofrequency radiation or any other suitable method known to the skilled person.

After curing, the mould is opened and the contact lens is removed. The produced contact lens is then hydrated, packed and sterilised in the usual manner.

The moulds of the present invention can be produced by any standard method. However, it is preferred that the moulds are produced according to the third aspect of the present invention.

Each mould half is commonly used only once and is itself formed by injection moulding into a "master" mould. A "master" of this kind produces moulds in which one part of the mould produces optical features on a lens and the rest of the mould does not. The level of accuracy required in a mould to produce optical features is typically higher than the rest of the mould. This is achieved by forming the "master" mould using at least one optical insert for producing the part of the mould half which produces the optical features in the lens. The optical insert is typically produced using a single point diamond lathe tool. Each tool has a number of parameters, one of which is the diamond radius. For a single point diamond lathe tool, the diamond radius is typically greater than or equal to 5µm. This radius is important as it limits the sharpness of any internal corner in an optical insert, which will impact on the properties of the mould. Where a particularly sharp internal corner is required in an optical insert, it is standard to use a two-part optical insert to achieve this, with each part of the insert providing one edge of the corner.

The insert pieces are typically made by single point diamond lathe tool turning on a two-axis lathe. The spindle holding the piece to be lathed can move in and out (defined as z-axis), while the diamond lathe tool can move in a single axis horizontally at right angles to the spindle (defined as x-axis). This means that a large area of the tool is used to generate the shape of the insert piece, that is different parts of the tool will be used depending on the angle between a tangent to the part at the point of cutting. For this approach to work, the tool radius must be known and tightly controlled. For lathing methods of this type, a tool with no radius would not be used.

However, in the present invention, a zero radius diamond lathe tool is used, that is a tool with a tip which is less than or equal to 3 µm. A tool of this kind advantageously can produce very sharp internal corners. A sharp internal corner in the optical insert forms a sharp external corner in, for example, a female mould. Tools of this kind are commercially available from diamond cutting tool suppliers such as Apex Diamond Products, Chase Diamond Tools, Contour Fine Tooling, K and Y Diamond and Technodiamant.

One side of a sharp corner of this kind in a female mould can be combined with a corresponding flat surface in a corresponding surface of a male mould to form the two rims of the first aspect of the present invention. The second side of the sharp corner forms the internal edge of the lens cavity.

By using a zero radius diamond lathe tool to produce the mould inserts, the resulting seal formed between the two mould halves produced therefrom is sharper and there is reduced monomer ingress, and therefore less seam at the edge of a produced lens. Zero radius diamond lathe tools have not previously been used in this manner. They are usually used as form tools, that is as tools which produce a cavity in the same shape as the tool. They are not used, as in this case, as a generation tool, that is a tool which produces a shape different from the tool.

Zero radius tools are typically only used in lathing operations where the tool is moved on multiple axes and the piece is only cut using a single part of the tool. It would not be apparent that this method of lathing was suitable to produce the insert pieces for making mould halves.

In the present invention, the edge seal of the mould defines both the edge of the lens cavity and seal. A very accurately formed corner, which does not suffer from having curvature resulting from the lathing tool, is particularly suitable at this point.

All features described in connection with any aspect of the invention can be used with any other aspect of the invention.

The invention will now be further described with reference to the following drawings in which:
Figure 1 shows a cross-section of a male and female mould half according to the present invention;
Figure 2 shows two magnified views of Figure 1 demonstrating the fit at the rim of the male and female mould halves where the mould halves were produced using a zero point radius tool; and
Figure 3 shows a magnified view of a cross section of the mould halves made from a mould insert produced using a single point diamond lathe tool with a given radius.
Figure 4 shows a series of cross-sections of mould halves having different shapes for forming different lens edges according to the present invention.

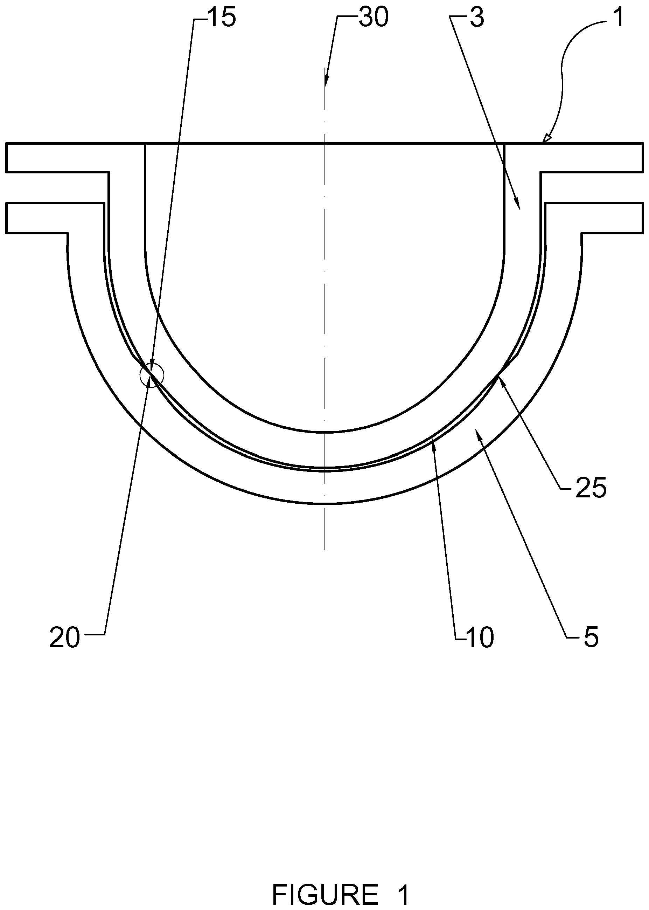

In Figure 1, there is provided a moulding set 1 formed of a male mould half 3 and a female mould half 5. The male mould half 3 and the female mould half 5 fit together to form a mould cavity 10.

The male mould half 3 has a rim 15 which meets with a rim 20 of the female mould half 5 to form a sealing rim 25 having an annular radius of approximately 75 µm. A central axis 30 passing through the centre points of each mould half is shown. The angle of the rims 15, 20 relative to this axis is approximately 45°.

The mould halves are formed of a medical grade polypropylene. Each mould half is made by injection moulding into a multi-cavity tool using a standard injection moulding machine such as those produced by Arburg, Battenfeld, B.O.Y., Demag, Engel Husky or Sumitomo. One tool is common for many different male mould halves and a separate tool is common for many different female mould halves. In alternative methods it is possible to use one mould tool to produce both the male and female mould halves. Specific mould halves (and therefore specific lenses) are defined by the optical insert tool which can be varied. Once the male and female mould halves are produced, they are loosely assembled together to protect the optic surfaces. Here it is advantageous that the mould halves do not fit together in an interference fit.

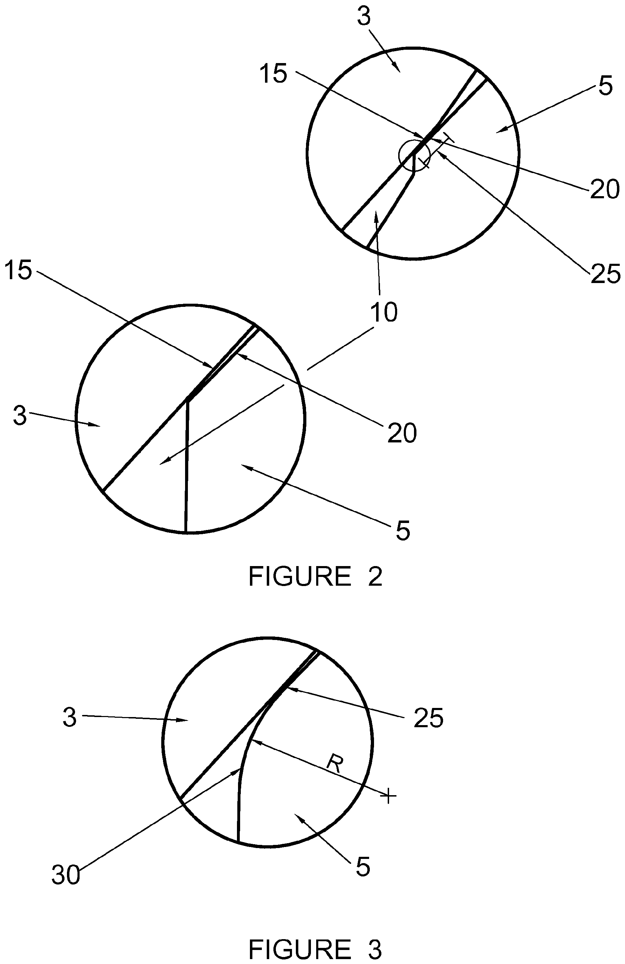

As can be seen in Figure 2, the rim 15 of the male mould half 3 has a lower angle than the rim 20 of the female mould half 5 by 2°. As the two mould halves 3, 5 fit together, they meet first at the point adjacent the mould cavity 10.

In use, a contact lens monomer mixture is added to the female mould half 3 and the male mould half 5 positioned on top. The male mould half is directed into position by the guiding nature of the rims 15, 20. The mould cavity 10 is full of the monomer mixture. The two mould halves 3, 5 are pushed together and a slight flexibility in the mould material forms a seal along the whole of the rim 20. The two mould halves are then sealed closed using thermal welding.

It can be seen that the guiding action of the two rims 15, 20 allows the male mould to fit more accurately into position on the female mould whilst at the same time providing an excellent edge seal.

The lens mould is then treated using UV light to cure the monomer mixture and the mould opened to provide a lens.

As can be seen in Figure 2, where a zero point tool has been used to form the master mould, the resultant female mould has a sharp corner at the point that it meets the male mould. Conversely, in Figure 3, where a single point tool is used to produce the master mould, there is a curve 30. The curve corresponds to an arc having a radius which is the same as the radius of the single point tool. In this case, the radius, labelled R, is 5 µm. This curve allows the monomer ingress and results in the formation of a seal around the rim of the lens. The provision of a rim is less satisfactory. Where a zero point tool is used, there is no curvature where the rims meet, providing a better edge seal.

For previous contact lens mould inserts, it would not be apparent that there was a problem with the use of a single point radius tool. However, with the new moulds of the first aspect, it can be seen that the zero point radius tool provides an advantageous fit of the mould halves.

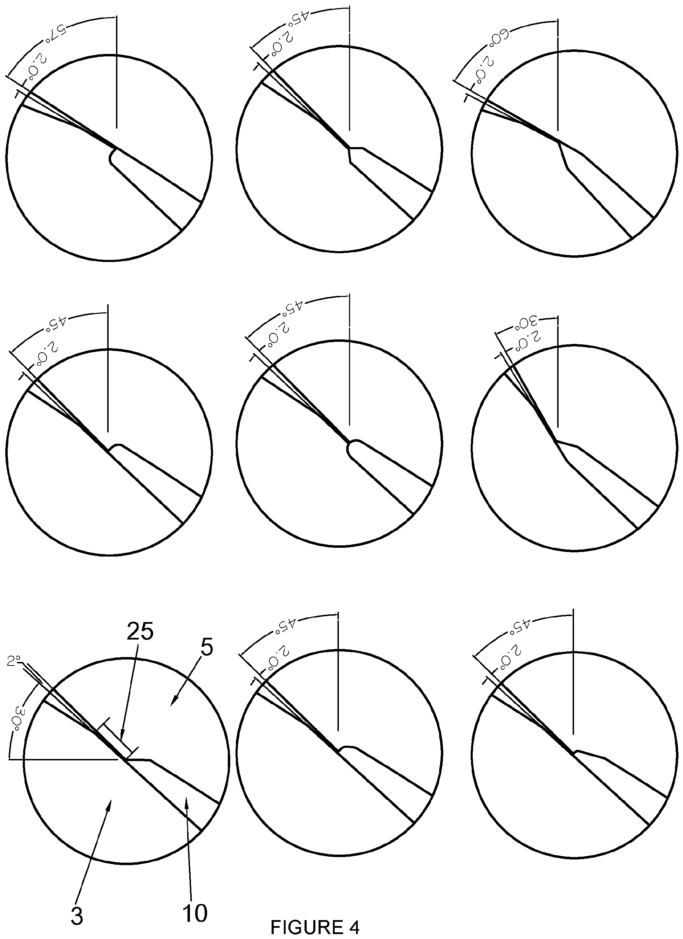

Figure 4 shows a magnified view of a series of different rims formed from the joining of male and female mould halves 3, 5. The different rims 15, 20, 25 fall within the scope of the first aspect of the present invention. The different shapes of the mould halves 3, 5 result in different edge shapes for the lenses that can be produced. As can be seen, in each of these examples, the point where the male mould half and the female mould half meet has a sharp corner in one of the mould halves. In each case therefore, the resultant mould is superior where a zero point tool is used to form the master mould.

Whilst the invention has been described with reference to a preferred embodiment, it will be appreciated that various modifications are possible within the scope of the claims.

## Claims

1. A mould (1) for the production of a contact lens, the mould comprising:
a first mould half (5) shaped to provide the front surface of the contact lens; and
a second mould half (3) shaped to provide the rear surface of the contact lens,
wherein the first and second mould halves form a mould cavity (10),
wherein the first mould half has a first rim (20) and the second mould half has a second rim (15), and the first and second rims fit together to provide a seal (25) for the mould cavity, **characterized in that** the first rim is inclined at an angle of x relative to an axis (30) passing through the centre of the first and second mould halves, wherein x is from 30 to 60°, and wherein the second rim is inclined at an angle of x-y relative to the axis passing through the centre of the first and second mould halves, where y is from 0 to 4°, wherein the angle of the first rim and the second rim is before the first and second mould halves are pushed together, and wherein the first and second rims provide a guide for the mould halves, and wherein the first and second mould halves fit together without an interference fit.

2. A mould as claimed in Claim 1, wherein x is from 40 to 50°.

3. A mould as claimed in Claim 1 or Claim 2, wherein y is from 0.25 to 2°.

4. A mould as claimed in any one of Claims 1 to 3, wherein the seal forms a sealing annulus, wherein the width of the rims where there is overlap is from 25 to 500 µm.

5. A mould as claimed in Claim 4, wherein the seal forms a sealing annulus, wherein the width of the rims where there is overlap is from 50 to 250 µm

6. A method of making a contact lens comprising:
providing a first mould half (5) shaped to provide the front surface of the contact lens and a second mould half (3) shaped to provide the rear surface of the contact lens wherein the first and second mould halves form a mould cavity (10),
wherein the first mould half has a first rim (20) and the second mould half has a second rim (15), and the first and second rims fit together to provide a seal (25) for the mould cavity, wherein the first rim is inclined at an angle of x relative to an axis (30) passing through the centre of the first and second mould halves,
wherein x is from 30 to 60°, and wherein the second rim is inclined at an angle of x-y relative to the axis passing through the centre of the first and second mould halves, where y is from 0 to 4°, wherein the angle of the first rim and the second rim is before the first and second mould halves are pushed together, and wherein the first and second rims provide a guide for the mould halves;
introducing a contact lens monomer composition into the first mould half;
mating the first and second mould halves, wherein the first and second rims guide the mould halves together;
wherein the first and second mould halves fit together without an interference fit;
curing the monomer composition to form a contact lens.

7. The method of Claim 6, using the mould of any one of Claims 1 to 5.

8. A method of making a contact lens mould (1) according to Claim 1, the mould comprising a first mould half (5) and a second mould half (3), the method comprising:
forming a first moulding insert for a first mould half;
fitting the first moulding insert into a first master mould;
forming a second moulding insert for a second mould half;
fitting the second moulding insert into a second master mould;
forming a first mould half in the first master mould; and
forming a second mould half in the second master mould,
wherein at least one of the first or second moulding inserts is formed using a diamond lathe tool with a tip of radius less than 3µm.

9. The method of claim 8, wherein at least one mould insert formed using the diamond lathe tool has an internal corner between two surfaces wherein the radius of the internal corner is less than or equal to 5µm.

10. The method of claim 9, wherein the radius of the internal corner is less than or equal to 3µm.

## Patentansprüche

1. Form (1) zur Herstellung einer Kontaktlinse, wobei die Form umfasst: eine erste Formhälfte (5), die geformt ist, um die Vorderseite der Kontaktlinse bereitzustellen; und eine zweite Formhälfte (3), die geformt ist, um die Rückseite der Kontaktlinse bereitzustellen, wobei die erste und die zweite Formhälfte einen Formhohlraum (10) bilden,
wobei die erste Formhälfte einen ersten Rand (20) aufweist und die zweite Formhälfte einen zweiten Rand (15) aufweist, und der erste und der zweite Rand zusammenpassen, um eine Dichtung (25) für den Formhohlraum bereitzustellen, **dadurch gekennzeichnet, dass** der erste Rand in einem Winkel von x bezogen auf eine Achse (30), die durch die Mitte der ersten und der zweiten Formhälfte durchgeht, geneigt ist, wobei x 30 bis 60° beträgt, und wobei der zweite Rand in einem Winkel von x-y bezogen auf die Achse, die durch die Mitte der ersten und der zweiten Formhälfte durchgeht, geneigt ist, wobei y 0 bis 4° beträgt, wobei der Winkel des ersten Randes und des zweiten Randes vorliegt, bevor die erste und die zweite Formhälfte zusammengedrückt werden, und wobei der erste und der zweite Rand eine Führung für die Formhälften bereitstellt, und wobei die erste und die zweite Formhälfte ohne Presspassung zusammenpassen.

2. Form nach Anspruch 1, wobei x 40 bis 50° beträgt.

3. Form nach Anspruch 1 oder Anspruch 2, wobei y 0,25 bis 2° beträgt.

4. Form nach einem der Ansprüche 1 bis 3, wobei die Dichtung einen Dichtring bildet, wobei die Breite der Ränder bei Überschneidung 25 bis 500µm beträgt.

5. Form nach Anspruch 4, wobei die Dichtung einen Dichtring bildet, wobei die Breite der Ränder bei Überschneidung 50 bis 250 µm beträgt.

6. Verfahren zur Herstellung einer Kontaktlinse, umfassend:
Bereitstellen einer ersten Formhälfte (5), die geformt ist, um die Vorderseite der Kontaktlinse bereitzustellen, und eine zweite Formhälfte (3), die geformt ist, um die Rückseite der Kontaktlinse bereitzustellen, wobei die erste und die zweite Formhälfte einen Formhohlraum (10) bilden, wobei die erste Formhälfte einen ersten Rand (20) aufweist und die zweite Formhälfte einen zweiten Rand (15) aufweist, und der erste und der zweite Rand zusammenpassen, um eine Dichtung (25) für den Formhohlraum bereitzustellen, wobei der erste Rand in einem Winkel von x bezogen auf eine Achse (30), die durch die Mitte der ersten und der zweiten Formhälfte durchgeht, geneigt ist,
wobei x 30 bis 60° beträgt, und wobei der zweite Rand in einem Winkel von x-y bezogen auf die Achse, die durch die Mitte der ersten und der zweiten Formhälfte durchgeht, geneigt ist,
wobei y 0 bis 4° ist, wobei der Winkel des ersten Randes und des zweiten Randes vorliegt, bevor die erste und die zweite Formhälfte zusammengedrückt werden, und wobei der erste und der zweite Rand eine Führung für die Formhälften bereitstellen;
Einbringen einer Kontaktlinsenmonomerzusammensetzung in die erste Formhälfte;
Zusammenfügen der ersten und der zweiten Formhälfte, wobei der erste und der zweite Rand die Formhälften zusammenführen;
wobei die erste und die zweite Formhälfte ohne Presspassung zusammenpassen;
Härten der Monomerzusammensetzung, um eine Kontaktlinse zu bilden.

7. Verfahren nach Anspruch 6 unter Verwendung der Form nach einem der Ansprüche 1 bis 5.

8. Verfahren zur Herstellung einer Kontaktlinsenform (1) nach Anspruch 1, wobei die Form eine erste Formhälfte (5) und eine zweite Formhälfte (3) umfasst, wobei das Verfahren umfasst:
Bilden eines ersten Formeinsatzes für eine erste Formhälfte;
Einpassen des ersten Formeinsatzes in eine erste Masterform;
Bilden eines zweiten Formeinsatzes für eine zweite Formhälfte;
Einpassen des zweiten Formeinsatzes in eine zweite Masterform;
Bilden einer ersten Formhälfte in der ersten Masterform; und
Bilden einer zweiten Formhälfte in der zweiten Masterform,
wobei mindestens einer des ersten oder zweiten Formeinsatzes mithilfe eines Diamantdrehwerkzeugs mit einer Spitze mit einem Radius von weniger als 3µm gebildet wird.

9. Verfahren nach Anspruch 8, wobei mindestens ein Formeinsatz, der mithilfe des Diamantdrehwerkzeugs gebildet wurde, eine Innenecke zwischen zwei Oberflächen aufweist, wobei der Radius der Innenecke kleiner oder gleich 5µm ist.

10. Verfahren nach Anspruch 9, wobei der Radius der Innenecke kleiner oder gleich 3µm ist.

## Revendications

1. Moule (1) pour la production d'une lentille de contact, le moule comprenant :
une première moitié de moule (5) formée pour fournir la surface avant de la lentille de contact ; et
une seconde moitié de moule (3) formée pour fournir la surface arrière de la lentille de contact,
les première et seconde moitiés de moule formant une cavité de moule (10),
dans lequel la première moitié de moule a un premier rebord (20) et la seconde moitié de moule a un second rebord (15), et les premier et second rebords s'emboîtant pour former un joint (25) pour la cavité de moule, **caractérisé par le fait que** le premier rebord est incliné à un angle de x par rapport à un axe (30) passant à travers le centre des première et seconde moitiés de moule, x étant compris entre 30 et 60°, et dans lequel le second rebord est incliné à un angle de x-y par rapport à l'axe passant à travers le centre des première et seconde moitiés de moule, y étant compris entre 0 et 4°, dans lequel l'angle du premier rebord et du second rebord se trouve avant que les première et seconde moitiés de moule ne soient poussées ensemble, et dans lequel les premier et second rebords fournissent un guide pour les moitiés de moule, et les première et seconde moitiés de moule s'emboîtent sans ajustement serré.

2. Moule selon la revendication 1, dans lequel x est compris entre 40 et 50°.

3. Moule selon la revendication 1 ou la revendication 2, dans lequel y est compris entre 0,25 et 2°.

4. Moule selon l'une quelconque des revendications 1 à 3, dans lequel le joint forme un espace annulaire d'étanchéité, et la largeur des rebords où se trouve un chevauchement est comprise entre 25 et 500 µm.

5. Moule selon la revendication 4, dans lequel le joint forme un espace annulaire d'étanchéité, et la largeur des rebords où se trouve un chevauchement est comprise entre 50 et 250 µm.

6. Procédé de fabrication d'une lentille de contact, comprenant :
fournir une première moitié de moule (5) formée pour fournir la surface avant de la lentille de contact et une seconde moitié de moule (3) formée pour fournir la surface arrière de la lentille de contact, les première et seconde moitiés de moule formant une cavité de moule (10), dans lequel la première moitié de moule a un premier rebord (20) et la seconde moitié de moule a un second rebord (15), et les premier et second rebords s'emboîtent pour former un joint (25) pour la cavité de moule, dans lequel le premier rebord est incliné à un angle de x par rapport à un axe (30) passant à travers le centre des première et seconde moitiés de moule, x étant compris entre 30 et 60°, et dans lequel le second rebord est incliné à un angle de x-y par rapport à l'axe passant à travers le centre des première et seconde moitiés de moule, y étant compris entre 0 et 4°, l'angle du premier rebord et du second rebord se trouvant avant que les première et seconde moitiés de moule ne soient poussées ensemble, et dans lequel les premier et second rebords fournissent un guide pour les moitiés de moule ;
introduire une composition monomère de lentille de contact dans la première moitié de moule ;
accoupler les première et seconde moitiés de moule, les premier et second rebords guidant les moitiés de moule ensemble ;
dans lequel les première et seconde moitiés de moule s'emboîtent sans ajustement serré ;
durcir la composition monomère pour former une lentille de contact.

7. Procédé selon la revendication 6, utilisant le moule selon l'une quelconque des revendications 1 à 5.

8. Procédé de fabrication d'un moule de lentille de contact (1) selon la revendication 1, le moule comprenant une première moitié de moule (5) et une seconde moitié de moule (3), le procédé comprenant :
former un premier insert de moulage pour une première moitié de moule ;
ajuster le premier insert de moulage dans un premier moule maître ;
former un second insert de moulage pour une seconde moitié de moule ;
ajuster le second insert de moulage dans un second moule maître ;
former une première moitié de moule dans le premier moule maître ; et
former une seconde moitié de moule dans le second moule maître,
au moins l'un des premier ou second insert de moulage étant formé à l'aide d'un outil de tour à diamant ayant une pointe de rayon inférieur à 3 µm.

9. Procédé selon la revendication 8, dans lequel au moins un insert de moule formé à l'aide de l'outil de tour à diamant a un coin interne entre deux surfaces, et le rayon du coin interne est inférieur ou égal à 5 µm.

10. Procédé selon la revendication 9, dans lequel le rayon du coin interne est inférieur ou égal à 3 µm.
